# FASCICULE DE BREVET EUROPEEN

(11) **EP 4 297 521 B1**
(45) Date de publication et mention de la délivrance du brevet: **31.07.2024**
(21) Numéro de dépôt: 23180504.5
(22) Date de dépôt: 21.06.2023
(51) Int. Cl.: H04W 76/27, H04W 76/15, H04W 88/04, H04W 24/02

(54) **PROCÉDÉS ET DISPOSITIFS D'ACTIVATION ET/OU DE DÉSACTIVATION D'UNE RADIO**
VERFAHREN UND VORRICHTUNGEN ZUR AKTIVIERUNG UND/ODER DEAKTIVIERUNG EINES FUNKGERÄTS
METHODS AND DEVICES FOR ACTIVATING AND/OR DEACTIVATING A RADIO

(30) Priorité: 23.06.2022 FR 2206242
(43) Date de publication de la demande: 27.12.2023
(73) Titulaire: Sagemcom Broadband SAS, 92270 Bois-Colombes (FR)
(72) Inventeur: LALAM, Massinissa, 92500 Rueil-Malmaison (FR)
(74) Mandataire: Novagraaf Technologies

(56) Documents cités:
- WO-A1-2015/082309
- US-B1- 8 897 152

## Description

### Domaine technique

Il est décrit des procédés respectivement d'activation et/ou de désactivation d'une radio d'un dispositif multi-radio. Des dispositifs mettant en oeuvre ces procédés sont également décrits. L'invention peut être utilisée dans le cadre de réseaux de communication, notamment mais pas uniquement de réseaux de communication locaux.

### Arrière-plan technique

Il est souhaitable de réduire la consommation d'une radio comprenant un point d'accès de réseau sans fil, par exemple un réseau local de type 'Wi-Fi' (marque déposée), et notamment lorsque le point d'accès n'est pas sollicité par un terminal. Par exemple, il est possible de réactiver une radio désactivée de façon périodique pour détecter d'éventuelles demandes d'association. Cependant, une telle approche n'est pas satisfaisante car elle introduit au mieux un délai dans l'association d'un terminal. Le document US 8897152 B1 décrit un système et une méthode pour minimiser les temps de latence des transitions de réseau tout en réduisant la consommation d'énergie.

### Résumé

Un ou plusieurs modes de réalisation concernent un dispositif comprenant
- au moins une première radio configurée pour être active lorsque le dispositif est en fonctionnement;
- au moins une seconde radio configurée pour être sélectivement active ou désactivée lorsque le dispositif est en fonctionnement;
- un processeur et une mémoire comportant du code qui quand il est exécuté par le processeur conduit le dispositif à :
   ∘ détecter l'association d'un dispositif client avec un point d'accès d'une radio active parmi les au moins une première radio et au moins une seconde radio ;
   ∘ déterminer si le dispositif client supporte une seconde radio désactivée parmi l'au moins une seconde radio et dans l'affirmative, activer ladite seconde radio désactivée.

Selon un ou plusieurs modes de réalisation, le processeur exécutant le code conduit le dispositif à annoncer l'activation d'une seconde radio sur au moins une radio déjà active parmi les au moins une première radio et au moins une seconde radio .

Selon un ou plusieurs modes de réalisation, la détermination du support par un dispositif client d'une ou plusieurs secondes radios est effectuée à partir d'une information contenue dans la demande d'association.

Selon un ou plusieurs modes de réalisation le processeur exécutant le code conduit le dispositif à transmettre, au dispositif client, une demande de transition vers un point d'accès de ladite seconde radio une fois celle-ci activée.

Un ou plusieurs modes de réalisation concernent un procédé mis en oeuvre par un dispositif de communication comprenant
- au moins une première radio configurée pour être active lorsque le dispositif est en fonctionnement;
- au moins une seconde radio (configurée pour être sélectivement active ou désactivée lorsque le dispositif est en fonctionnement;
- un processeur et une mémoire comportant du code qui quand il est exécuté par le processeur conduit le dispositif de communication à mettre en oeuvre le procédé, le procédé comprenant :
   ∘ détecter l'association d'un dispositif client avec un point d'accès d'une radio active parmi les au moins une première radio et au moins une seconde radio ;
   ∘ déterminer si le dispositif client supporte une seconde radio désactivée parmi l'au moins une seconde radio et dans l'affirmative, activer ladite seconde radio désactivée.

Selon un ou plusieurs modes de réalisation, le procédé comprend l'annonce de l'activation d'une seconde radio sur au moins une radio déjà active.

Selon un ou plusieurs modes de réalisation, la détermination du support par un dispositif client d'une ou plusieurs secondes radios est effectuée à partir d'une information contenue dans une trame reçue du dispositif client.

Selon certains modes de réalisation, la trame est une trame d'association ou une trame de demande de mesure.

Selon un ou plusieurs modes de réalisation, le procédé comprend la transmission au dispositif client d'une demande de transition vers un point d'accès de ladite seconde radio une fois celle-ci activée.

Un ou plusieurs modes de réalisation concernent un dispositif de communication comprenant
- au moins une première radio configurée pour être active lorsque le dispositif est en fonctionnement ;
- au moins une seconde radio configurée pour être sélectivement active ou désactivée lorsque le dispositif est en fonctionnement;
- un processeur et une mémoire comportant du code qui quand il est exécuté par le processeur conduit le dispositif à :
   ∘ en réponse à un événement de désassociation d'un dispositif client associé à un point d'accès d'une radio active parmi les au moins une première radio et au moins une seconde radio, déterminer si une seconde radio active est supportée
   par au moins un autre dispositif client associé à un point d'accès de l'une des radios actives parmi les au moins une première radio et au moins une seconde radio, et

∘ dans la négative, désactiver ladite seconde radio active.

Selon un ou plusieurs modes de réalisation, la détermination du support par un dispositif client d'une ou plusieurs secondes radios est effectuée à partir d'une information contenue dans une trame reçue du dispositif client.

Selon certains modes de réalisation, la trame est une trame d'association ou une trame de demande de mesure.

Selon un ou plusieurs modes de réalisation, la détermination est effectuée après une temporisation suite à l'événement de désassociation.

Selon un ou plusieurs modes de réalisation, la désactivation d'une radio comprend l'arrêt de l'alimentation électrique de l'un parmi :
- tous les composants actifs de la radio;
- au moins un circuit d'amplification de puissance.

Un ou plusieurs modes de réalisation concernent un procédé mis en oeuvre par un dispositif de communication comprenant
- au moins une première radio configurée pour être active lorsque le dispositif est en fonctionnement;
- au moins une seconde radio configurée pour être sélectivement active ou désactivée lorsque le dispositif est en fonctionnement;
- un processeur et une mémoire comportant du code qui quand il est exécuté par le processeur conduit le dispositif de communication à mettre en oeuvre le procédé, le procédé comprenant :
   ∘ en réponse à un événement de désassociation d'un dispositif client associé à un point d'accès d'une radio active, la détermination si une seconde radio active est supportée par au moins un autre dispositif client associé à un point d'accès de l'une des radios actives, et
   ∘ dans la négative, la désactivation de ladite seconde radio active.

Selon un ou plusieurs modes de réalisation, la détermination du support par un dispositif client donné d'une ou plusieurs secondes radios est effectuée à partir d'une information contenue dans une trame d'association précédemment reçue du dispositif client donné.

Selon un ou plusieurs modes de réalisation, la détermination est effectuée après une temporisation suite à l'événement de désassociation.

Selon un ou plusieurs modes de réalisation, la désactivation d'une seconde radio comprend l'arrêt de l'alimentation électrique de l'un parmi :
- tous les composants actifs de la radio;
- au moins un circuit d'amplification de puissance.

Un ou plusieurs modes de réalisation concernent un produit programme d'ordinateur comprenant des instructions qui, lorsque le programme est exécuté par un processeur d'un dispositif conduisent l'un des dispositifs ci-dessus à mettre en oeuvre l'un des procédés associés décrits.

Un ou plusieurs modes de réalisation concernent un support d'enregistrement lisible par un dispositif muni d'un processeur, ledit support comprenant des instructions qui, lorsque le programme est exécuté par un processeur d'un dispositif conduisent l'un des dispositifs ci-dessus à mettre en oeuvre l'un des procédés associés décrits.

### Brève description des figures

D'autres caractéristiques et avantages apparaitront au cours de la lecture de la description détaillée qui va suivre pour la compréhension de laquelle on se reportera aux dessins annexés parmi lesquels :
la figure 1 est un diagramme bloc fonctionnel d'un dispositif selon un mode de réalisation particulier non limitatif ;
la figure 2 est un diagramme bloc fonctionnel d'une radio selon un mode de réalisation particulier non limitatif ;
la figure 3 est un algorigramme d'un procédé d'activation et/ou de désactivation d'une radio secondaire selon un mode de réalisation particulier non-limitatif ;
la figure 4 est un diagramme de séquence de messages illustrant un procédé de transition d'un dispositif client vers une radio selon un mode de réalisation particulier non-limitatif;
la figure 5 est un diagramme de séquence de messages selon une variante du procédé selon la figure 4;
la figure 6 est un diagramme de séquence de messages illustrant un procédé de désactivation d'une radio secondaire selon un mode de réalisation particulier non-limitatif.

### Description détaillée

Dans la description qui va suivre, des éléments identiques, similaires ou analogues seront désignés par les mêmes chiffres de référence. Sauf indication contraire, les diagrammes ne sont pas nécessairement à l'échelle.

Les diagrammes blocs, algorigrammes et diagrammes de séquence de messages dans les figures illustrent l'architecture, les fonctionnalités et le fonctionnement de systèmes, dispositifs, procédés et produits programmes d'ordinateur selon un ou plusieurs exemples de réalisation. Chaque bloc d'un diagramme bloc ou chaque phase d'un algorigramme peut représenter un module ou encore une portion de code logiciel comprenant des instructions pour l'implémentation d'une ou plusieurs fonctions. Selon certaines implémentations, l'ordre des blocs ou des phases peut être changé, ou encore les fonctions correspondantes peuvent être mises en oeuvre en parallèle. Les blocs ou phases de procédé peuvent être implémentés à l'aide de circuits, de logiciels ou d'une combinaison de circuits et de logiciels, et ce de façon centralisée, ou de façon distribuée, pour tout ou partie des blocs ou phases. Les systèmes, dispositifs, procédés et méthodes décrits peuvent être modifiés, faire l'objet d'ajouts et/ou de suppressions tout en restant dans le cadre de la présente description. Par exemple, les composants d'un dispositif ou d'un système peuvent être intégrés ou séparés. Également, les fonctions décrites peuvent être mises en oeuvre à l'aide de plus ou de moins de composants ou de phases, ou encore avec d'autres composants ou à travers d'autres phases. Tout système de traitement de données adapté peut être utilisé pour l'implémentation. Un système ou dispositif de traitement de données adapté comprend par exemple une combinaison de code logiciel et de circuits, tels un processeur, contrôleur ou autre circuit adapté pour exécuter le code logiciel. Lorsque le code logiciel est exécuté, le processeur ou contrôleur conduit le système ou dispositif à mettre en oeuvre tout ou partie des fonctionnalités des blocs et/ou des phases des procédés ou méthodes selon les exemples de réalisation. Le code logiciel peut être stocké dans une mémoire ou un support lisible accessible directement ou à travers un autre module par le processeur ou contrôleur.

Un dispositif selon un ou plusieurs exemples de réalisation comprend au moins deux radios. Une radio comprend les composants pour héberger au moins un point d'accès (« Access Point », ou 'AP', en langue anglais), qui permet l'accès au réseau du point d'accès à des dispositifs clients (encore appelés terminaux, ou « Stations », ou 'STA', en langue anglaise). Un dispositif comprend au moins une radio dite primaire et au moins une radio dite secondaire. Par radio primaire, on entend une radio qui est en principe toujours activée lorsque le dispositif est en fonctionnement. Par radio secondaire, on entend une radio qui peut être soit activée, soit désactivée.

Les points d'accès hébergés par une radio opèrent sur un même canal, qui est le canal de la radio. Ce canal appartient à une bande de fréquence (par exemple des bandes de fréquence autour de 2.4, 5 et 6 GHz respectivement), la bande de fréquence étant subdivisée en une pluralité de canaux sur lesquels une radio peut opérer.

Une radio est dite activée si au moins un point d'accès hébergé par cette radio signale sa présence. Lorsque le réseau est un réseau opéré selon l'un des standards de la famille des standards 802.11 de l'Institute of Electrical and Electronics Engineers « IEEE », ou réseau dit de type 'Wi-Fi', un point d'accès signale sa présence par exemple en émettant des trames balise (« beacon » en langue anglaise) ou encore peut signaler sa présence en émettant une trame de réponse (« probe response » en langue anglaise) à une trame de demande d'information sur les réseaux présents (« probe request » en langue anglaise) reçue de la part d'un terminal. Pour une radio activée, les composants nécessaires pour l'émission et la réception sont alimentés.

Une radio est dite désactivée si aucun point d'accès que cette radio héberge ne signale sa présence ou ne peut signaler sa présence en réponse à une sollicitation. Dans cet état, on peut couper toute l'alimentation électrique liée à l'utilisation de cette radio désactivée. Selon une variante de réalisation, certains composants peuvent continuer à être alimentés pour faciliter le redémarrage.

Dans ce qui va suivre, on prendra à titre illustratif l'exemple d'une passerelle résidentielle opérant un réseau sans-fil de type 'Wi-Fi'. Le dispositif peut être autre qu'une passerelle, il peut s'agir par exemple d'un routeur ou d'un répéteur de couverture radio ('repeater' en langue anglaise) ou d'un dispositif d'extension de couverture radio (`extender' en langue anglaise) dans un réseau sans-fil de type maillé. Le réseau peut être autre qu'un réseau local de type 'Wi-Fi', y compris un réseau cellulaire opéré par exemple selon l'un des standards 2G / 3G / 4G / 5G. Un réseau est typiquement identifié par un nom. Dans le cas d'un réseau de type 'Wi-Fi', le nom est l'identifiant 'SSID'. Les capacités sont déterminées par le standard avec lequel les entités qui opèrent dans le réseau sans fil sont compatibles. Dans un exemple, un dispositif client, entité opérant dans le réseau sans fil, implémente des fonctionnalités selon le standard IEEE 802.11 décrites par les amendements b/g/n/ax pour la bande 2.4GHz, implémente des fonctionnalités selon le standard IEEE 802.11 décrites par les amendements a/n/ac/ax pour la bande 5GHz et implémente des fonctionnalités selon le standard IEEE 802.11 décrites par les amendements ax dans la bande 6GHz. Dans cet exemple, l'amendement ax détermine les capacités du dispositif client. Dans un autre exemple, un point d'accès dispose de fonctionnalités lui permettant d'opérer selon des amendements parmi ceux du standard IEEE 802.11 et selon plusieurs bandes parmi les bandes 2.4GHz, 5GHz et 6GHz. Les capacités de ce point d'accès sont déterminées par ces amendements et correspondent aux fonctionnalités dudit point d'accès. Par abus de langage, on peut parler de standard IEEE 802.11ax ou technologie IEEE 801.11ax en lieu et place d'amendement 11ax par exemple. Des protocoles de chiffrement, par exemple le WPA2 ou le WPA3, peuvent également être mis en oeuvre dans les échanges entre entités du réseau.

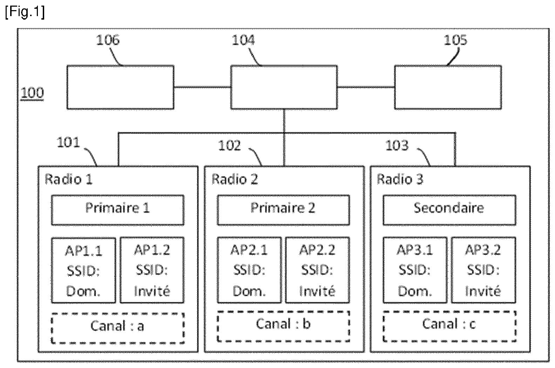

La figure 1 est un diagramme bloc selon un ou plusieurs exemples de réalisation non-limitatifs. Selon l'exemple de la figure 1, une passerelle 100 comporte deux radios primaires 101, 102 et une radio secondaire 103. Dans l'exemple de la figure 1, chaque radio comporte deux points d'accès, un point d'accès à un réseau domestique privé et un autre point d'accès à un réseau pour invités.

Dans le cas où la passerelle est une passerelle de type 'Wi-Fi', le réseau domestique et le réseau pour invités d'une même radio possèdent des identifiants SSID distincts.

La passerelle 100 comporte en outre un processeur 104, une mémoire long terme 105 et une mémoire de travail 106. Le processeur 104 contrôle les fonctionnalités de la passerelle et gère les différentes radios. La mémoire 105 comporte du code logiciel qui, quand il est exécuté par le processeur, conduit à la mise en oeuvre par le dispositif d'un ou plus procédés décrits. La mémoire 106 sert notamment à stocker les données relatives à la gestion des radios, ainsi que des données relatives aux terminaux associés ou susceptibles de s'associer à l'un des points d'accès. Les canaux respectifs sur lesquels travaillent les trois radios sont les canaux désignés par 'a', 'b' et 'c'.

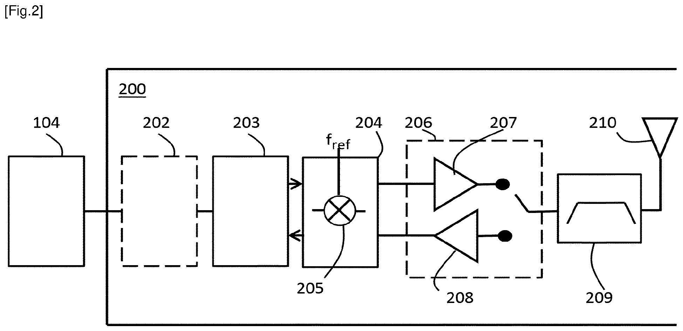

La figure 2 est un diagramme des blocs fonctionnels d'une radio 200 selon un exemple de réalisation fourni à titre illustratif. La radio 200 de la figure 2 est un exemple d'implémentation d'une des radios 101, 102 ou 103 de la figure 1. La radio 200 est contrôlée par l'intermédiaire du microcontrôleur ou processeur 104 du dispositif hôte, dans le cas présent la passerelle 100. La radio comprend un processeur propre 202 et processeur numérique de traitement de signal 203 communément appelé `DSP'. Ce dernier comporte un convertisseur numérique/analogique sur la voie de transmission et un convertisseur analogique/numérique sur la voie de réception. Le processeur propre 202 de la radio est entouré d'une ligne en pointillés pour indiquer qu'il peut être optionnel en tant que composant distinct en fonction de l'implémentation - en effet, selon certains modes de réalisation, ses fonctionnalités peuvent être intégrées avec d'autres composants, comme le processeur 104. Les signaux analogiques en transmission, respectivement en réception, sont modulés, respectivement démodulés, par un modem radiofréquences 204. Un module frontal 206 amplifie le signal en transmission (amplificateur de puissance 207), tandis que le signal en réception est amplifié par un bloc-convertisseur à faible bruit 208. Un filtre 209 commutable entre la voie de transmission et la voie de réception s'intercale entre la sortie de l'amplificateur de puissance 207 et l'antenne 210 d'une part et l'entrée du bloc-convertisseur à faible bruit 208 et l'antenne 210 d'autre part. Selon le présent exemple, le filtre 209 et l'antenne 210 sont des composants passifs, tandis que les autres composants sont des composants actifs. Il est à noter que dans d'autres implémentations, le filtre 209 et/ou l'antenne 210 peuvent également être des composants non-passifs.

La figure 2 illustre le cas d'une radio avec une seule chaine de transmission/réception, cependant une radio peut comporter plusieurs chaines de transmission/réception. Certains composants peuvent être communs à plusieurs chaînes, par exemple le processeur 202 ou le processeur numérique de traitement de signal 203.

Selon certains modes de réalisation, la désactivation d'une radio revient à désactiver les composants non-passifs de la radio, c'est-à-dire que leur alimentation est coupée. Dans l'exemple illustratif de la figure 2, les composants non-passifs comprennent au moins le processeur de traitement de signal 203, le modem 204, le module frontal 205 et si présent et séparément désactivable, le processeur propre 202. Si plusieurs chaines de réception/transmission sont présentes, les composants non-passifs sont désactivés pour toutes les chaînes. Les composants non-passifs peuvent être différents dans d'autres implémentations.

Selon d'autres exemples de réalisation, seul un sous-ensemble de ces composants est désactivé. Par exemple, l'amplificateur de puissance 207 étant un composant à consommation élevée, il est désactivé en priorité. On maintient cependant le processeur 202, le processeur numérique de traitement de signal 203 et le modem 204 activés, c'est-à-dire alimentés, pour permettre un redémarrage rapide de la radio. Si on maintient le bloc convertisseur à faible bruit 208 activé et l'élément 209 commutable vers la voie de réception, alors on a une radio qui possède encore des capacités de réception afin de détecter par exemple des trames de demande d'information.

### Procédé d'activation et/ou de désactivation d'une radio secondaire

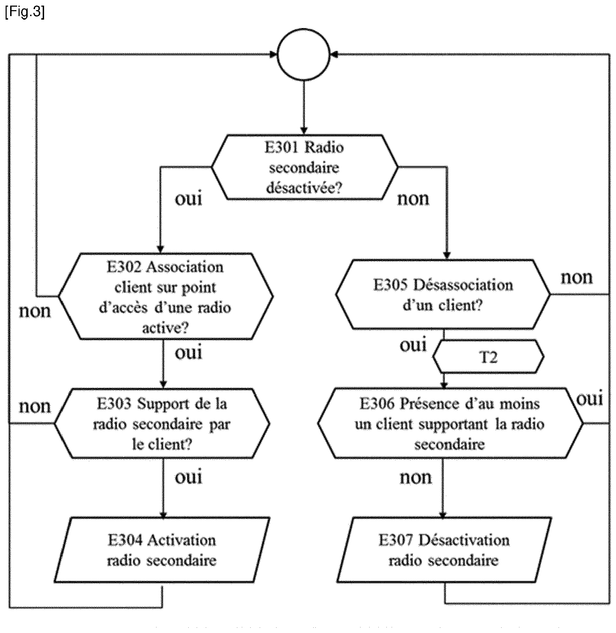

La figure 3 est un algorigramme d'un procédé selon un exemple de réalisation non-limitatif pour l'activation et/ou la désactivation d'une radio secondaire. Dans ce qui suit, le procédé sera décrit dans son application à une radio secondaire - il peut cependant facilement être étendu à plusieurs radios secondaires, comme décrit tant que nécessaire plus loin. Dans le cas d'un dispositif avec une seule radio secondaire, le procédé de la figure 3 est par exemple mis en oeuvre par le dispositif 100 de la figure 1.

Le procédé comprend un procédé pour activer une radio secondaire désactivée et un procédé pour désactiver une radio secondaire activée. Bien que ces deux procédés soient présentés dans une même figure, ils peuvent être considérés séparément. En particulier, il est possible d'utiliser un procédé d'activation tel que celui de la figure 3, mais d'utiliser un procédé de désactivation autre que le procédé illustré par la figure 3. Pareillement, le procédé de désactivation de la figure 3 peut être utilisé avec un procédé d'activation autre que celui de la figure 3. Selon le présent exemple de réalisation, le procédé est mis en oeuvre de façon centralisée sous le contrôle du processeur 104 de la passerelle pour l'ensemble des radios de la passerelle. Selon l'état d'une radio secondaire, soit les événements d'association (dispositif client rejoignant un réseau opéré par un point d'accès d'une radio activée), soit les événements de désassociation (dispositif client quittant un réseau opéré par un point d'accès d'une radio activée) sont considérés. Le procédé d'activation va surveiller les événements d'association (arrivées) de dispositifs client sur les points d'accès activés et, si un dispositif client supporte la radio secondaire désactivée, procéder à l'activation de cette radio secondaire désactivée. Le procédé de désactivation va surveiller les événements de désassociation (départs) de dispositifs client des points d'accès activés et procéder à la désactivation d'une radio secondaire activée si aucun autre dispositif client encore associé à l'un des points d'accès du dispositif ne supporte cette radio secondaire.

### Procédé d'activation d'une radio secondaire

Dans la figure 3, un mode de réalisation du procédé d'activation d'une radio secondaire est illustré par la branche gauche (301 à 304) de l'algorigramme.

Dans un premier temps, en 301, il est déterminé si une radio secondaire est dans l'état désactivé ou non.

Si la radio secondaire est désactivée (test positif en 301), alors les événements d'association sur tous les points d'accès hébergés par des radios activées sont surveillés pour déterminer l'association d'un dispositif client à l'un des points d'accès du dispositif mettant en oeuvre le procédé. En cas d'association d'un dispositif client (test positif en 302), les radios secondaires supportées par ce dispositif client sont déterminées et il est vérifié si la radio secondaire désactivée fait partie des radios secondaires supportées (test positif en 303). Si la radio secondaire désactivée fait partie des radios secondaires supportées, la radio secondaire désactivée est activée (304). Si la radio secondaire désactivée ne fait pas partie des radios secondaires supportées (test négatif en 303), la radio secondaire reste désactivée, et les événements d'association continuent à être surveillés.

Selon un ou plusieurs modes de réalisation, la détermination de la ou des radios supportées par un dispositif client se fait par l'analyse de trames d'association du dispositif client reçues par un point d'accès d'une radio primaire ou d'une radio secondaire active.

Dans un exemple de réseau sans fil opérant selon l'un des standards 802.11, une procédure d'association utilise une trame de requête d'association (« Association Request » en langue anglaise) et une trame de réponse d'association (« Association Response » en langue anglaise). La désassociation utilise une trame de désassociation (« Disassociation » en langue anglaise).

Dans le cas de réseaux opérant selon l'un des standards 802.11 ou dit de type 'Wi-Fi', l'information indiquant le support d'une radio par un dispositif client peut être déterminée à partir d'un élément d'information (« Information Element » ou 'IE' en langue anglaise) appelé Classes de Fonctionnement Supportées (« Supported Operating Classes » en langue anglaise). Une analyse des valeurs contenues dans cet élément d'information permet de déterminer quels canaux sont supportées par un dispositif client et dans quelles bandes de fréquence. L'élément d'information est présent dans la trame d'association d'un dispositif client. Les valeurs possibles sont définies par exemple dans le tableau E-4 de l'annexe E du document IEEE802.11-2020 et de son amendement IEEE802.11 ax-2021.

A titre d'exemple illustratif, toujours si le réseau est de type 'Wi-Fi' et si la radio secondaire est une radio 6 GHz, alors uniquement la technologie IEEE 802.11ax (ou 'Wi-Fi 6') ou une technologie ultérieure est supportée par cette radio secondaire. Ainsi, si un dispositif client s'associe sur une radio 5 GHz et indique supporter au maximum la technologie IEEE 802.11ac (ou 'Wi-Fi 5)' il n'est pas nécessaire d'activer la radio 6 GHz, le dispositif client ne supportant pas la technologie minimale requise pour opérer dans cette bande.

Selon le type de réseau, la personne du métier saura adapter la source d'information pour la détermination des radios supportées.

L'activation d'une radio secondaire comprend la mise sous tension des composants de cette radio et la signalisation de la présence du ou des points d'accès hébergés par cette radio secondaire, par exemple selon l'une des façons décrites précédemment.

Selon une première variante de réalisation, une fois une radio secondaire activée, la ou les radios primaires annoncent que ladite radio secondaire est activée. Par exemple, l'annonce peut indiquer les canaux d'opération de la radio secondaire nouvellement activée.

Selon une seconde variante de réalisation, toutes les radios activées (qu'elles soient primaires ou secondaires) annoncent que ladite radio secondaire est activée. Dans le cas de plusieurs radios secondaires, une radio secondaire déjà activée participe alors à l'annonce de l'activation d'une autre radio secondaire. Par exemple, comme ci-dessus, l'annonce peut indiquer les canaux d'opération de la radio secondaire nouvellement activée.

Le fait d'annoncer l'activation d'une radio secondaire sur d'autres radios que cette radio secondaire permet de propager cette information efficacement. Ceci est particulièrement avantageux dans le cas où la bande supportée par la radio secondaire activée est très large (e.g. la bande des 6 GHz) afin de faciliter la découverte des points d'accès hébergés par ladite radio secondaire par des dispositifs clients associés sur des points d'accès hébergés par d'autres radios que ladite radio secondaire.

Dans le cas d'un réseau de type 'Wi-Fi', le fait qu'un point d'accès hébergé par une radio secondaire est activé est communiqué par ledit point d'accès par l'émission de trame de balises et/ou de trames en réponse à une sollicitation. Le fait qu'un point d'accès hébergé par une radio secondaire est activé peut également être communiqué par la diffusion d'un élément d'information de rapport compressé des voisins (« Reduced Neighbor Report » ou `RNR' en langue anglaise) par le ou les autres points d'accès, participant ainsi à l'annonce. Cet élément d'information peut être diffusé via les trames balises et/ou les trames en réponse à une sollicitation.

Si plus d'une radio secondaire est présente dans le dispositif, le procédé d'activation est mis en oeuvre si au moins l'une de ces radios secondaires est désactivée. Le test en 301 est adapté en conséquence. Si plus d'une radio secondaire désactivée est présente dans le dispositif, il est vérifié pour chacune d'elles (en 303) si elles sont supportées par un dispositif client qui vient de s'associer (en 302) et chacune des radios secondaires désactivées supportées par le dispositif client est alors activée (en 304).

Le procédé est réitéré tant qu'au moins une radio secondaire n'est pas active.

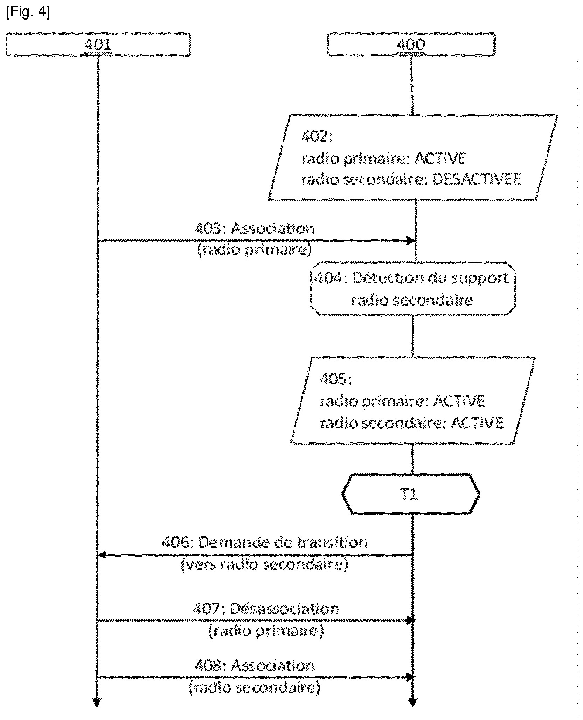

La figure 4 est un diagramme illustrant un mode de réalisation d'un procédé optionnel de transition d'un dispositif client 401 d'une radio à laquelle ce dispositif est associé à une radio secondaire qui a été activée. La figure 4 montre entre autres les messages échangés entre le dispositif client 401 et un dispositif 400 comportant au moins une radio primaire et une radio secondaire. Le dispositif 400 peut par exemple être le dispositif 100 de la figure 1. En 402, une radio primaire est active et une radio secondaire est désactivée. En 403, le dispositif client 401 s'associe à un point d'accès de la radio primaire. Le dispositif 400 détermine en 404 si le dispositif client 401 supporte la radio secondaire désactivée. On supposera dans le cadre du présent exemple que cette détermination est positive. La radio secondaire devient alors active (404). Une temporisation T1 est alors enclenchée. Après cette temporisation, le dispositif 400 détermine si le dispositif client 401 est toujours associé à un point d'accès hébergé par une radio autre que la radio secondaire qui a été activée. Le dispositif 400 transmet alors au dispositif client 401 une demande de transition 406 du point d'accès auquel le dispositif client est actuellement associé vers un point d'accès hébergé par la radio secondaire. La temporisation T1 est optionnelle, elle peut donc être nulle. Selon certains exemples de réalisation, la temporisation T1 est de l'ordre de quelques millisecondes.

Une transition peut typiquement être initiée lorsqu'il est nécessaire de répartir la charge parmi les radios actives.

Selon un mode de réalisation, la demande de transition comporte des informations permettant au dispositif client d'identifier la radio secondaire et/ou un ou plusieurs points d'accès hébergés par ladite radio secondaire.

Dans le cas d'un réseau de type 'Wi-Fi', cette demande de transition peut notamment se faire par l'émission d'une trame dite de Gestion de Transition BSS (« BSS Transition Management » ou `BTM' en langue anglaise). Cette trame est définie dans le document IEEE 802.11v et contient des informations permettant à un dispositif client de détecter un point d'accès hébergé par la radio secondaire et qui signalerait sa présence. La trame est émise par le point d'accès auquel le dispositif client est associé.

Le dispositif client reçoit la demande de transition 406. Si le dispositif client décide de répondre positivement à cette demande, il transmet une demande de désassociation 407 au point d'accès auquel il est associé, puis une demande d'association 408 à un point d'accès de la radio secondaire. La transition est alors achevée.

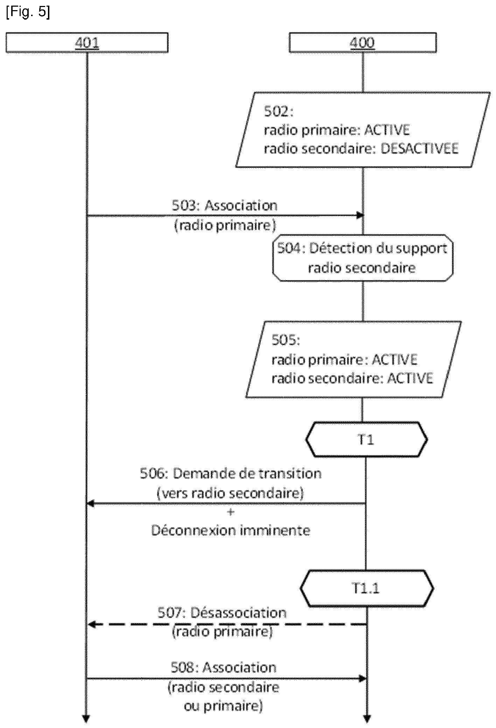

La figure 5 est un diagramme illustrant une variante de réalisation du procédé de la figure 4. Dans le cadre de cette variante, les éléments référencés 502 à 505 sont respectivement similaires aux éléments 402 à 405. Une temporisation T1 est également reprise. La demande de transition 506 de la figure 5 comporte, en plus des données déjà décrites en lien avec la demande de transition 406 de la figure 4, également une information de déconnexion du dispositif client 401 par le dispositif 400 du point d'accès auquel le dispositif client est actuellement associé. Le but de la transmission de cette information par le dispositif 400 est de motiver le dispositif client 401 à effectuer la transition vers la radio secondaire. Cette information de déconnexion peut par exemple indiquer une déconnexion imminente, après une temporisation T1.1. Dans certaines implémentations, la temporisation T1.1 peut être de valeur nulle. Dans d'autres implémentations, elle sera par exemple de l'ordre de la dizaine ou de la centaine de millisecondes.

Dans le cas d'un réseau de type 'Wi-Fi', l'information de déconnexion imminente peut être incluse dans la trame de Gestion de Transition BSS mentionnée précédemment en liaison avec la figure 4. La transmission d'une telle trame contenant une information de déconnexion imminente est en principe suivie par l'envoi par le point d'accès auquel le dispositif client 401 est associé d'une trame de désassociation à ce dispositif client. Le dispositif client peut optionnellement demander un délai.

Suite à la transmission par le dispositif 400 de la demande de transition 506 contenant l'information de déconnexion imminente et la temporisation optionnelle T1.1, une trame de désassociation 507 est transmise par le dispositif 400. Le dispositif client 401 transmet alors une demande d'association 508 à un point d'accès d'une radio primaire ou d'une radio secondaire active.

Selon une variante du procédé de transition de la figure 5, aucune trame de désassociation 507 n'est envoyée par le dispositif 400 au dispositif client, alors même que l'envoi de cette trame est annoncé dans la trame de demande de transition 506.

Dans le cas d'un réseau Wi-Fi, selon une variante d'un des procédés de transition des figures 4 et 5 (ainsi que de la variante du paragraphe précédent), la demande de transition n'est pas effectuée à l'aide d'une trame BTM, mais à l'aide d'une trame `multibande agile' (ou 'Agile Multiband' en langue anglaise) défini par l'organisme 'Wi-Fi Alliance'. La trame 'Agile Multiband' permet à un point d'accès d'être plus contraignant dans sa demande de transition.

Il est à noter que les figures 4 et 5 montrent un exemple simplifié où le dispositif 400 comporte une radio primaire et une radio secondaire et où le dispositif client 401 est initialement associé à un point d'accès de la radio primaire. Le dispositif 400 peut bien entendu comporter plus d'une radio primaire et/ou plus d'une radio secondaire et le procédé illustré sera ajusté en conséquence. Par exemple, le dispositif client 401 peut être initialement associé à un point d'accès d'une radio active quelconque, y compris secondaire. Le dispositif 401 peut également effectuer une transition vers un point d'accès d'une radio active quelconque.

Grâce au procédé d'activation d'une radio secondaire, la consommation d'un dispositif comportant au moins une radio secondaire est réduite en n'activant une radio secondaire que lorsqu'au moins un dispositif client supportant cette radio est présent.

Selon certains modes de réalisation, si le dispositif comporte plusieurs radios secondaires, alors chacune peut être activée séparément.

Selon certains modes de réalisation, l'information de la ou des radios supportées par un dispositif client est obtenue directement du dispositif client.

### Procédé de désactivation d'une radio secondaire

En revenant à la figure 3, si la radio secondaire est à l'état activé (test négatif en 301), alors les événements de désassociation de dispositifs client sont surveillés.

En cas de désassociation d'un dispositif client (test positif en 305), il est déterminé si au moins un autre des dispositifs clients toujours associés aux points d'accès des radios actives supporte la radio secondaire. La détection de l'évènement de désassociation d'un dispositif client peut se faire par la réception d'une trame de désassociation émise par ledit dispositif client ou par l'envoi d'une trame de désassociation émise par le dispositif 100 ou par l'absence de trame reçue en provenance dudit dispositif client malgré l'envoi de sollicitations émises par le dispositif 100. Cette vérification est effectuée après une temporisation T2. Selon certains exemples de réalisation, la temporisation peut avoir une durée de l'ordre de la seconde.

Si au moins un dispositif client associé supporte la radio secondaire active (test positif en 307), celle-ci est laissée à l'état activé, Si tel n'est pas le cas (test négatif en 307), alors la radio secondaire est désactivée (308). La temporisation T2 permet de s'assurer, avant de désactiver une radio secondaire, que le dispositif client supportant cette radio secondaire a effectivement quitté le réseau, à savoir qu'il n'est associé à aucun point d'accès signalant sa présence et hébergé par l'une des radios actives du dispositif 100.

Si plus d'une radio secondaire est présente dans le dispositif, le procédé de désactivation est mis en oeuvre si au moins l'une de ces radios secondaires est active. Si plus d'une radio secondaire active est présente dans le dispositif, il est vérifié pour chacune d'elles, en cas de désassociation d'un dispositif client, si elles sont toujours supportées par au moins un des dispositifs client toujours associés à l'une des radios du dispositif mettant en oeuvre le procédé. Le cas échéant, chacune des radios secondaires actives qui ne sont plus supportées par aucun des dispositifs clients associés sont désactivées. Le procédé est réitéré tant qu'au moins une radio secondaire est à l'état activé.

Selon un mode de réalisation particulier, le dispositif maintient une liste des dispositifs clients associés aux points accès des radios actives du dispositif, ainsi que pour chaque dispositif client, la liste des radios secondaires supportées. Cette tâche peut par exemple être effectuée sous le contrôle d'un processeur du dispositif multi-radio, par exemple le processeur 104. Elle peut également être distribuée sur les processeurs de chaque radio, qu'ils soient des composants distincts ou intégrés dans d'autres composants.

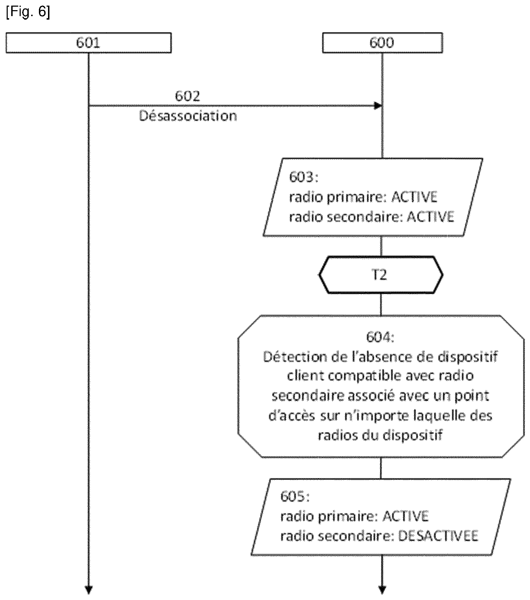

La figure 6 est un diagramme de séquence de messages du procédé de désactivation d'une radio secondaire d'un dispositif multi-radio 600. Un dispositif client 601 est initialement associé à un point d'accès d'une radio secondaire active du dispositif 600. Le dispositif 601 client transmet une trame de désassociation 602 au dispositif 600. En 603, une radio primaire du dispositif 600 est active, tandis que la radio secondaire est également active. En 604, le dispositif 600 vérifie s'il reste au moins un dispositif client associé à un point d'accès hébergé par une radio active de ce dispositif 600 et qui supporte la radio secondaire. En supposant que ce ne soit pas le cas, le dispositif 600 modifie l'état de la radio secondaire - elle est désactivée (605). Si un dispositif client supportant cette radio secondaire persiste, l'état de la radio secondaire n'est pas modifié et le dispositif 600 attend la prochaine trame de désassociation.

Bien que les dispositifs 400 et 600 ci-dessus portent des numéros de référence différents et soient présentés pour des procédés séparés dans les figures, un même dispositif peut implémenter les deux procédés et leurs divers modes de réalisation et variantes.

Dans ce qui précède, divers avantages ont été décrits. Un mode de réalisation spécifique peut présenter un ou plusieurs de ces avantages, mais pas forcément tous les avantages. Certains modes de réalisation peuvent présenter un ou plusieurs avantages non décrits et ne pas présenter d'avantages décrits.

### SIGNES DE REFERENCE

- 100: - Dispositif
- 101: - Radio 1 primaire
- 102: - Radio 2 primaire
- 103: - Radio 3 secondaire
- 104: - Processeur
- 105: - Mémoire long terme
- 106: - Mémoire de travail
- 200: - Radio
- 201: - Processeur du dispositif
- 202: - Processeur de la radio
- 203: - Processeur numérique de traitement du signal
- 204: - Modulateur-démodulateur RF
- 205: - Mixeur
- 206: - Module frontal
- 207: - Amplificateur de puissance
- 208: - Bloc-convertisseur à faible bruit
- 209: - Filtre
- 210: - Antenne
- 400: - Dispositif multi-radio
- 401: - Dispositif client
- 600: - Dispositif multi-radio
- 601: - Dispositif client

## Revendications

1. Dispositif de communication (100, 400) comprenant
- au moins une première radio (101, 102) configurée pour être active lorsque le dispositif est en fonctionnement;
- au moins une seconde radio (103) configurée pour être sélectivement active ou désactivée lorsque le dispositif est en fonctionnement;
- un processeur (104) et une mémoire comportant du code, le dispositif étant **caractérisé en ce que** lorsque le code est exécuté par le processeur, le dispositif met en oeuvre les étapes suivantes :
∘ détecter l'association d'un dispositif client (401) avec un point d'accès d'une radio active parmi les au moins une première radio et au moins une seconde radio ;
∘ déterminer (303, 404, 504) si le dispositif client supporte une seconde radio désactivée parmi l'au moins une seconde radio et dans l'affirmative, activer (304, 405, 505) ladite seconde radio désactivée.

2. Dispositif selon la revendication 1, dans lequel le processeur exécutant le code conduit le dispositif à annoncer l'activation d'une seconde radio sur au moins une radio déjà active parmi les au moins une première radio et au moins une seconde radio.

3. Dispositif selon l'une des revendications 1 ou 2, dans lequel la détermination du support par un dispositif client d'une ou plusieurs secondes radios est effectuée à partir d'une information contenue dans une trame reçue du dispositif client.

4. Dispositif selon l'une des revendications 1 à 3, dans lequel le processeur exécutant le code conduit le dispositif à transmettre, au dispositif client, une demande de transition (406, 506) vers un point d'accès de ladite seconde radio une fois celle-ci activée.

5. Procédé mis en oeuvre par un dispositif de communication (100, 400) comprenant au moins une première radio (101, 102) configurée pour être active lorsque le dispositif est en fonctionnement;
- au moins une seconde radio (103) configurée pour être sélectivement active ou désactivée lorsque le dispositif est en fonctionnement;
- un processeur (104) et une mémoire comportant du code, le procédé étant **caractérisé en ce que** lorsque le code est exécuté par le processeur du dispositif de communication, le procédé met en oeuvre les étapes suivantes :
∘ détecter l'association d'un dispositif client (401) avec un point d'accès hébergé par une radio active parmi les au moins une première radio et au moins une seconde radio ;
∘ déterminer (303, 404, 504) si le dispositif client supporte une seconde radio désactivée parmi l'au moins une seconde radio et dans l'affirmative, activer (304, 405, 505) ladite seconde radio désactivée.

6. Procédé selon la revendication 5, comprenant l'annonce de l'activation d'une seconde radio sur au moins une radio déjà active parmi les au moins une première radio et au moins une seconde radio.

7. Procédé selon l'une des revendications 5 ou 6, dans lequel la détermination du support par un dispositif client d'une ou plusieurs secondes radios est effectuée à partir d'une information contenue dans une trame reçue du dispositif client.

8. Procédé selon l'une des revendications 5 à 7, comprenant la transmission au dispositif client (401) d'une demande de transition (406, 506) vers un point d'accès de ladite seconde radio une fois celle-ci activée.

9. Dispositif de communication (100, 600) comprenant
- au moins une première radio (101, 102) configurée pour être active lorsque le dispositif est en fonctionnement ;
- au moins une seconde radio (103) configurée pour être sélectivement active ou désactivée lorsque le dispositif est en fonctionnement;
- un processeur (104) et une mémoire comportant du code, le dispositif étant **caractérisé en ce que** lorsque le code est exécuté par le processeur, le dispositif met en oeuvre les étapes suivantes :
∘ en réponse à un événement de désassociation (305, 602) d'un dispositif client associé à un point d'accès d'une radio active parmi les au moins une première radio et au moins une seconde radio, déterminer (306, 604) si une seconde radio active est supportée par au moins un autre dispositif client associé à un point d'accès d'une des radios actives parmi les au moins une première radio et au moins une seconde radio, et
∘ dans la négative, désactiver (307, 605) ladite seconde radio active.

10. Dispositif selon la revendication 9, dans lequel la détermination du support par un dispositif client donné d'une ou plusieurs secondes radios est déterminé à partir d'une information contenue dans une trame d'association précédemment reçue du dispositif client donné.

11. Dispositif selon l'une des revendications 9 ou 10, dans lequel la détermination est effectuée après une temporisation (T2) suite à l'événement de désassociation.

12. Dispositif selon l'un des revendication 9 à 11, dans lequel la désactivation d'une seconde radio comprend l'arrêt de l'alimentation électrique de l'un parmi :
- tous les composants actifs de la radio (202 - 208);
- au moins un circuit d'amplification de puissance (207).

13. Procédé mis en oeuvre par un dispositif de communication (100, 600) comprenant au moins une première radio (101, 102) configurée pour être active lorsque le dispositif est en fonctionnement;
- au moins une seconde radio (103) configurée pour être sélectivement active ou désactivée lorsque le dispositif est en fonctionnement;
- un processeur (104) et une mémoire comportant du code, le procédé étant **caractérisé en ce que** lorsque le code est exécuté par le processeur du dispositif de communication, le procédé met en oeuvre les étapes suivantes :
∘ en réponse à un événement de desassociation d'un dispositif client associé à un point d'accès hébergé par une radio active parmi les au moins une première radio et au moins une seconde radio, la détermination si une seconde radio active est supportée par au moins un autre dispositif client associé à un point d'accès d'une des radios actives parmi les au moins une première radio et au moins une seconde radio, et
∘ dans la négative, la désactivation de ladite seconde radio active.

14. Procédé selon la revendication 13, dans lequel la détermination du support par un dispositif client donné d'une ou plusieurs secondes radios est déterminé à partir d'une information contenue dans une trame d'association précédemment reçue du dispositif client donné.

15. Procédé selon l'une des revendications 13 ou 14, dans lequel la détermination est effectuée après une temporisation (T2) suite à l'événement de désassociation.

16. Procédé selon l'une des revendication 13 à 15, dans lequel la désactivation d'une seconde radio comprend l'arrêt de l'alimentation électrique de l'un parmi :
- tous les composants actifs de la radio (202 - 208);
- au moins un circuit d'amplification de puissance (207).

## Patentansprüche

1. Kommunikationsvorrichtung (100, 400), umfassend
- mindestens eine erste Funkeinrichtung (101, 102), die konfiguriert ist, um aktiv zu sein, wenn die Vorrichtung in Betrieb ist;
- mindestens eine zweite Funkeinrichtung (103), die konfiguriert ist, um selektiv aktiv oder deaktiviert zu sein, wenn die Vorrichtung in Betrieb ist;
- einen Prozessor (104) und einen Speicher, der Code aufweist, wobei die Vorrichtung **dadurch gekennzeichnet ist, dass** die Vorrichtung, wenn der Code durch den Prozessor ausgeführt wird, die folgenden Schritte vornimmt:
o Erkennen der Zuordnung einer Client-Vorrichtung (401) zu einem Zugangspunkt einer aktiven Funkeinrichtung unter der mindestens einen ersten Funkeinrichtung und der mindestens einen zweiten Funkeinrichtung;
o Bestimmen (303, 404, 504), ob die Client-Vorrichtung eine zweite deaktivierte Funkeinrichtung unter der mindestens einen zweiten Funkeinrichtung unterstützt, und im bejahenden Fall, Aktivieren (304, 405, 505) der zweiten deaktivierten Funkeinrichtung.

2. Vorrichtung nach Anspruch 1, wobei der Prozessor, der den Code ausführt, der die Vorrichtung dazu bringt, die Aktivierung einer zweiten Funkeinrichtung auf mindestens einer bereits aktiven Funkeinrichtung unter der mindestens einen ersten Funkeinrichtung und der mindestens einen zweiten Funkeinrichtung zu melden.

3. Vorrichtung nach einem der Ansprüche 1 oder 2, wobei die Bestimmung der Unterstützung einer oder mehrerer zweiter Funkeinrichtungen durch eine Client-Vorrichtung anhand von einer Informationen erfolgt, die in einem durch die Client-Vorrichtung empfangenen Datenblock enthalten ist.

4. Vorrichtung nach einem der Ansprüche 1 bis 3, wobei der Prozessor den Code ausführt, der die Vorrichtung dazu bringt, eine Übergangsanforderung (406, 506) an einen Zugangspunkt der zweiten Funkeinrichtung, sobald diese aktiviert ist, an die Client-Vorrichtung zu senden.

5. Verfahren, das durch eine Kommunikationsvorrichtung (100, 400) vorgenommen wird, umfassend mindestens eine erste Funkeinrichtung (101, 102), die konfiguriert ist, um aktiv zu sein, wenn die Vorrichtung in Betrieb ist;
- mindestens eine zweite Funkeinrichtung (103), die konfiguriert ist, um selektiv aktiv oder deaktiviert zu sein, wenn die Vorrichtung in Betrieb ist;
- einen Prozessor (104) und einen Speicher, der Code aufweist, wobei das Verfahren **dadurch gekennzeichnet ist, dass** das Verfahren, wenn der Code durch den Prozessor der Kommunikationsvorrichtung ausgeführt wird, die folgenden Schritte vornimmt:
o Erkennen der Zuordnung einer Client-Vorrichtung (401) zu einem Zugangspunkt, der durch eine aktive Funkeinrichtung unter der mindestens einen ersten Funkeinrichtung und der mindestens einen zweiten Funkeinrichtung untergebracht wird;
o Bestimmen (303, 404, 504), ob die Client-Vorrichtung eine zweite deaktivierte Funkeinrichtung unter der mindestens einen zweiten Funkeinrichtung unterstützt, und im bejahenden Fall, Aktivieren (304, 405, 505) der zweiten deaktivierten Funkeinrichtung.

6. Verfahren nach Anspruch 5, umfassend das Melden der Aktivierung einer zweiten Funkeinrichtung auf mindestens einer bereits aktiven Funkeinrichtung unter der mindestens einen ersten Funkeinrichtung und der mindestens einen zweiten Funkeinrichtung.

7. Verfahren nach einem der Ansprüche 5 oder 6, wobei die Bestimmung der Unterstützung einer oder mehrerer zweiter Funkeinrichtungen durch eine Client-Vorrichtung anhand von einer Information erfolgt, die in einem durch die Client-Vorrichtung empfangenen Datenblock enthalten ist.

8. Verfahren nach einem der Ansprüche 5 bis 7, umfassend das Senden einer Übergangsanforderung (406, 506) zu einem Zugangspunkt der zweiten Funkeinrichtung, sobald diese aktiviert ist, an die Client-Vorrichtung (401).

9. Kommunikationsvorrichtung (100, 600), umfassend
- mindestens eine erste Funkeinrichtung (101, 102), die konfiguriert ist, um aktiv zu sein, wenn die Vorrichtung in Betrieb ist;
- mindestens eine zweite Funkeinrichtung (103), die konfiguriert ist, um selektiv aktiv oder deaktiviert zu sein, wenn die Vorrichtung in Betrieb ist;
- einen Prozessor (104) und einen Speicher, der Code aufweist, wobei die Vorrichtung **dadurch gekennzeichnet ist, dass** die Vorrichtung, wenn der Code durch den Prozessor ausgeführt wird, die folgenden Schritte vornimmt:
o als Reaktion auf ein Trennungsereignis (305, 602) einer Client-Vorrichtung, die einem Zugangspunkt einer aktiven Funkeinrichtung unter der mindestens einen ersten Funkeinrichtung und der mindestens einen zweiten Funkeinrichtung zugeordnet ist, Bestimmen (306, 604), ob eine zweite aktive Funkeinrichtung durch mindestens eine andere Client-Vorrichtung unterstützt wird, die einem Zugangspunkt einer der aktiven Funkeinrichtungen unter der mindestens einen ersten Funkeinrichtung und der mindestens einen zweiten Funkeinrichtung zugeordnet ist, und
o wenn nicht, Deaktivieren (307, 605) der zweiten aktiven Funkeinrichtung.

10. Vorrichtung nach Anspruch 9, wobei die Bestimmung der Unterstützung einer oder mehrerer zweiter Funkeinrichtungen durch eine gegebene Client-Vorrichtung anhand von einer Information bestimmt wird, die in einem durch die Client-Vorrichtung vorher empfangenen Zuordnungsdatenblock enthalten ist.

11. Vorrichtung nach einem der Ansprüche 9 oder 10, wobei die Bestimmung nach einer Verweilzeit (T2) nach dem Trennungsereignis erfolgt.

12. Vorrichtung nach einem der Ansprüche 9 bis 11, wobei die Deaktivierung einer zweiten Funkeinrichtung das Stoppen der Stromversorgung zu einer umfasst unter:
- sämtlichen der aktiven Komponenten der Funkeinrichtung (202 - 208);
- mindestens einer Leistungsverstärkungsschaltung (207).

13. Verfahren, das durch eine Kommunikationsvorrichtung (100, 600) vorgenommen wird, umfassend
- mindestens eine erste Funkeinrichtung (101, 102), die konfiguriert ist, um aktiv zu sein, wenn die Vorrichtung in Betrieb ist;
- mindestens eine zweite Funkeinrichtung (103), die konfiguriert ist, um selektiv aktiv oder deaktiviert zu sein, wenn die Vorrichtung in Betrieb ist;
- einen Prozessor (104) und einen Speicher, der Code aufweist, wobei das Verfahren **dadurch gekennzeichnet ist, dass** das Verfahren, wenn der Code durch den Prozessor der Kommunikationsvorrichtung ausgeführt wird, die folgenden Schritte vornimmt:
o als Reaktion auf ein Trennungsereignis einer Client-Vorrichtung, die einem Zugangspunkt, der durch eine aktive Funkeinrichtung unter der mindestens einen ersten Funkeinrichtung und der mindestens einen zweiten Funkeinrichtung untergebracht wird, zugeordnet ist, Bestimmen, ob eine zweite aktive Funkeinrichtung durch mindestens eine andere Client-Vorrichtung unterstützt wird, die einem Zugangspunkt einer der aktiven Funkeinrichtungen unter der mindestens einen ersten Funkeinrichtung und der mindestens einen zweiten Funkeinrichtung zugeordnet ist, und
o wenn nicht, Deaktivieren der zweiten aktiven Funkeinrichtung.

14. Verfahren nach Anspruch 13, wobei das Bestimmen der Unterstützung einer oder mehrerer zweiter Funkeinrichtungen durch eine gegebene Client-Vorrichtung anhand von einer Information bestimmt wird, die in einem durch die Client-Vorrichtung vorher empfangenen Zuordnungsdatenblock enthalten ist.

15. Verfahren nach einem der Ansprüche 13 oder 14, wobei das Bestimmen nach einer Verweilzeit (T2) nach dem Trennungsereignis erfolgt.

16. Verfahren nach einem der Ansprüche 13 bis 15, wobei das Deaktivieren einer zweiten Funkeinrichtung das Stoppen der Stromversorgung zu einer umfasst unter:
- sämtlichen der aktiven Komponenten der Funkeinrichtung (202 - 208);
- mindestens einer Leistungsverstärkungsschaltung (207).

## Claims

1. Communication device (100, 400) comprising
- at least one first radio (101, 102) which is configured to be active when the device is in operation;
- at least one second radio (103) which is configured to be selectively active or deactivated when the device is in operation;
- a processor (104) and a memory comprising code, the device being **characterized in that,** when the code is executed by the processor, the device carries out the following steps:
∘ detecting the association of a client device (401) with an access point of an active radio from the at least one first radio and at least one second radio;
∘ determining (303, 404, 504) whether the client device supports a deactivated second radio from the at least one second radio and, if so, activating (304, 405, 505) said deactivated second radio.

2. Device according to claim 1, wherein the processor executing the code causes the device to announce the activation of a second radio over at least one already active radio from the at least one first radio and at least one second radio.

3. Device according to one of claims 1 or 2, wherein the determination of the support of one or more second radios by a client device is performed on the basis of information which is contained in a frame received from the client device.

4. Device according to one of claims 1 to 3, wherein the processor executing the code causes the device to transmit, to the client device, a request (406, 506) to transition to an access point of said second radio once it has been activated.

5. Method carried out by a communication device (100, 400) comprising at least one first radio (101, 102) which is configured to be active when the device is in operation;
- at least one second radio (103) which is configured to be selectively active or deactivated when the device is in operation;
- a processor (104) and a memory comprising code, the method being **characterized in that,** when the code is executed by the processor of the communication device, the method carries out the following steps:
∘ detecting the association of a client device (401) with an access point hosted by an active radio from the at least one first radio and at least one second radio;
∘ determining (303, 404, 504) whether the client device supports a deactivated second radio from the at least one second radio and, if so, activating (304, 405, 505) said deactivated second radio.

6. Method according to claim 5, comprising announcing the activation of a second radio over at least one already active radio from the at least one first radio and at least one second radio.

7. Method according to one of claims 5 or 6, wherein the determination of the support of one or more second radios by a client device is performed on the basis of information which is contained in a frame received from the client device.

8. Method according to one of claims 5 to 7, comprising transmitting, to the client device (401), a request (406, 506) to transition to an access point of said second radio once it has been activated.

9. Communication device (100, 600) comprising
- at least one first radio (101, 102) which is configured to be active when the device is in operation;
- at least one second radio (103) which is configured to be selectively active or deactivated when the device is in operation;
- a processor (104) and a memory comprising code, the device being **characterized in that,** when the code is executed by the processor, the device carries out the following steps:
∘ in response to a disassociation event (305, 602) of a client device associated with an access point of an active radio from the at least one first radio and at least one second radio, determining (306, 604) whether an active second radio is supported by at least one other client device associated with an access point of one of the active radios from the at least one first radio and at least one second radio, and
∘ if not, deactivating (307, 605) said active second radio.

10. Device according to claim 9, wherein the determination of the support of one or more second radios by a given client device is determined on the basis of information which is contained in an association frame previously received from the given client device.

11. Device according to one of claims 9 or 10, wherein the determination is performed after a time delay (T2) following the disassociation event.

12. Device according to one of claims 9 to 11, wherein the deactivation of a second radio comprises shutting down the power supply to one of:
- all active components of the radio (202-208);
- at least one power amplification circuit (207).

13. Method carried out by a communication device (100, 600) comprising
- at least one first radio (101, 102) which is configured to be active when the device is in operation;
- at least one second radio (103) which is configured to be selectively active or deactivated when the device is in operation;
- a processor (104) and a memory comprising code, the method being **characterized in that,** when the code is executed by the processor of the communication device, the method carries out the following steps:
∘ in response to a disassociation event of a client device associated with an access point hosted by an active radio from the at least one first radio and at least one second radio, determining whether an active second radio is supported by at least one other client device associated with an access point of one of the active radios from the at least one first radio and at least one second radio, and
∘ if not, deactivating said active second radio.

14. Method according to claim 13, wherein the determination of the support of one or more second radios by a given client device is determined from information which is contained in an association frame previously received from the given client device.

15. Method according to one of claims 13 or 14, wherein the determination is performed after a time delay (T2) following the disassociation event.

16. Method according to one of claims 13 to 15, wherein deactivating a second radio comprises shutting down the power supply to one of:
- all active components of the radio (202-208);
- at least one power amplification circuit (207).
